Europäisches Patentamt

(19) European Patent Office

Office européen des brevets

(11) Publication number: 0 043 113
A2

# (12) EUROPEAN PATENT APPLICATION

(21) Application number: 81104936.0

(22) Date of filing: 26.06.81

(51) Int. Cl.³: F 28 F 21/04
F 23 L 15/04

(30) Priority: 26.06.80 US 163042

(43) Date of publication of application:
06.01.82 Bulletin 82/1

(84) Designated Contracting States:
DE FR GB IT SE

(71) Applicant: GTE Products Corporation
100 West 10th Street
Wilmington Delaware(US)

(72) Inventor: Cleveland, Joseph J.
305 Poplar Street
Towanda Pa 18848(US)

(72) Inventor: Dorazio, Raymond E.
R. D. 2
Wysox Pa. 18854(US)

(72) Inventor: Gonzalez, Jeffrey
R. D. 1 Race Street NE Apartment 24
Towanda Pa 18848(US)

(74) Representative: Reinländer & Bernhardt Patentanwälte
Orthstrasse 12
D-8000 München 60(DE)

(54) Ceramic heat recuperative apparatus.

(57) Heat recuperative apparatus having a ceramic cross-flow recuperator disposed within a housing and having first, second and third opposing faces with aligned passages for first and second fluids on the first and second pairs of opposing faces and a compression means for exerting a compressive force on at least one of the third pair of opposing faces of the ceramic cross-flow recuperator and said housing.

FIG. I

## TITLE
see front page

### TECHNICAL FIELD

This invention relates to heat recuperative apparatus and more particularly to heat recuperative apparatus having a ceramic cross-flow recuperator disposed within a housing and a means for exerting a compressive force intermediate the recuperator and housing in a direction normal to the direction of cross-flow.

### BACKGROUND ART

Energy conservation and energy costs are of greatly increasing interest under present day conditions and a particular area of interest is in increasing the operational efficiency of such apparatus as furnaces, ovens and calciners. As is known, the waste heat of such apparatus may be utilized by cross-flow type recuperator apparatus to preheat incoming air suitable for use in effecting combination in the furnace or oven. In this manner, furnace efficiency is improved at little or no cost and energy conservation and cost reduction is achieved.

Presently, cross-flow recuperators are commonly constructed of metal parts which are relatively heavy, expensive and subject to undesired corrosion due to the inherent content of the waste gases. However, recuperative apparatus utilizing ceramic cross-flow recuperators are available and, compared to metal, are characterized by their relatively light weight, mechanical strength and resistance to corrosion. Moreover,

-2-

However, even though all of the above-mentioned techniques have contributed to the reduction of undesired leakage, it has been found that sudden and greatly increased amounts of leakage are encountered should the ceramic recuperator sustain damage or cracking. In other words, inadvertent shut down of a furnace, rapid loss of air flow, mechanical damage to the recuperator or any one of numerous other possibilities may cause a sudden and unexpected increase in undesired leakage. Thus, it becomes necessary to provide additional protection from such undesired and unforseeable occurances.

SUMMARY OF THE INVENTION

Accordingly, a heat recuperative apparatus having a ceramic cross-flow recuperator disposed within a housing is provided in one aspect of the invention. The recuperator and housing have first, second and third pairs of opposing faces with aligned passages for first and second fluids through the first and second pairs of opposing faces respectively and a compressive force exerted intermediate at least one of the third pair of opposing faces of the recuperator and housing.

BRIEF DESCRIPTION OF THE DRAWINGS

Fig. 1 is a perspective view, partially sectioned, of an embodiment of heat recuperative apparatus of the invention;

Fig. 2 is a cross-sectional view of Fig. 1, taken along the line 2-2; and

Fig. 3 is an enlarged illustration of a preferred form of compression means for applying a force intermediate the recuperator and housing.

BEST MODE FOR CARRYING OUT THE INVENTION

For a better understanding of the present invention, together with other and further objects, advantages and capabilities thereof, reference is made to the following disclosure and appended claims in conjunction with the accompanying drawings.

-3-

ceramic recuperators are available in a variety of shapes and sizes, can withstand relatively high temperatures and have a relatively low thermal expansion coefficients as compared with metal.

However, the numerous advantages of ceramic cross-flow recuperators over metal structures does not mean that problems have not been encountered with ceramic recuperators fabricated by stacking ribbed layers frequently resulted in undesired leakage between the layers. Such incidents of undesired leakage were greatly reduced by a selaing technique disclosed in U.S. Patent No. 4,130,160 issued December 19, 1978 and assigned to the present Assignee.

In another example, it was found that a ceramic cross-flow recuperator disposed within a metal housing tended to exhibit undesired leakage due to the difference in thermal expansion of the ceramic recuperator and the metal housing. As a result, improved sealing intermediate the ceramic recuperator and metal housing was developed as disclosed in U.S. Patent No. 4,083,400 issued April 11, 1978 and assigned to the Assignee.

Additionally, further reduction in air leakage has been found to be achievable by spring-loading the recuperator and housing in the direction of the incoming air flow in a furnace for example. In other words, leakage is further reduced by exerting pressure intermediate the ceramic cross-flow recuperator and the metal housing in the direction of the high pressure air flow. Thus, improved sealing between layers, improved sealing between recuperator and housing, and exerting pressure between the recuperator and housing in the direction of incoming air flow have all contributed to a reduction in undesired leakage.

23,087

-4-

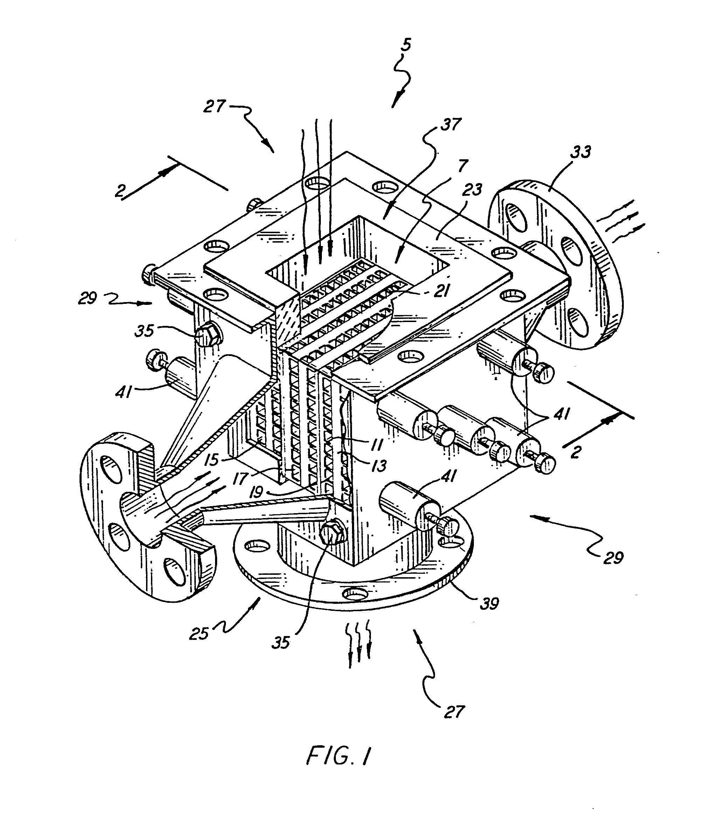

Referring to the drawings, Fig. 1 is a partially sectioned perspective view of a preferred form of heat recuperative apparatus 5 including a ceramic cross-flow recuperator 7 disposed within a housing 9. The ceramic cross-flow recuperator is preferably formed from a plurality of ribbed ceramic sheets stacked in a manner such that alternate layers 11 and 13 are positioned in a direction normal to one another. The alternate layers 11 and 13 of ceramic ribbed sheets are sealed to one another to provide passages normal to one another for conduction therethrough of first and second fluids respectively.

The ceramic cross-flow recuperator 7 may be formed by casting, molding, extruding or any one of a number of well-known techniques for forming ceramics as detailed in the previously-mentioned U.S. Patent No. 4,130,160. Also, the recuperator 7 may be in the form of a cube and preferably is in the form of multiple sections, 15, 17 and 19 of stacked ribbed sheets separated by a compressible structure 21. Examples of a compressible structure 21 includes mullite paper, silicon rubber and deformable stainless steel. Thus, the form of the recuperator 7 and the choice of material for the compressible structure 21 are dependent upon the operational conditions and temperatures to which the recuperative apparatus is subjected.

The housing 9 is preferably in the form of welded or drawn metal with a ceramic liner 23 affixed to the inner surface thereof and formed to accommodate the ceramic cross-flow recuperator 7. Thus, the ceramic liner 23 serves to insulate the metal housing 9 from the heat present at the ceramic cross-flow recuperator 7 during operation of the furnace, oven or calciner for example. Also, the ceramic cross-flow recuperator 7 and housing 9 each have first, second and third pairs of opposing faces, 25, 27 and 29 respectively.

The first pair of opposing faces 25 of the ceramic recuperator 7 include passages therethrough for transmitting a first fluid while the housing 9 has flanged tapered portions 31 and 33 suitable for attachment to expedite flow of the first fluid or combustible air suitable to a furnace. Also, a plurality of compression means 35 may be, not necessarily need be, affixed to one of the opposing faces 25 of the housing 9 to provide a compressive force intermediate at least one of the pair of opposing faces 25 of the ceramic cross-flow recuperator 7 and housing 9.

The second pair of opposing faces 27 of the ceramic recuperator 7 includes passages therethrough for transmitting a second fluid such as relatively hot waste gases for example. As is known, the second fluid or relatively hot waste gases are utilized in the ceramic cross-flow recuperator to raise the temperature or preheat the first fluid or combustible air flowing through the normal positioned passages of the recuperator 7. Also, the second pair of opposing faces 27 of the housing 9 includes an opening 37 of a size and configuration to provide entry of the recuperator 7 into the housing 9 as well as fluid flow through the recuperator 7 and out as flanged opening 39.

The third pair of opposing faces 29 of the recuperator 7 and housing 9 do not provide for passage of a fluid therethrough but, importantly, do include a plurality of compressive means 41 exerting a force between the recuperator 7 and housing 9. Each one of the compressive means 41 is affixed to at least one of the pair of opposing faces 29 of the housing 9 and exerts a force intermediate thereto and at least one of the pair of opposing third pair of faces 29 of the recuperator 7. Obviously and preferably, compressive means 41 and a force is provided intermediate both of the third pair of opposing faces of the recuperator 7 and housing 9.

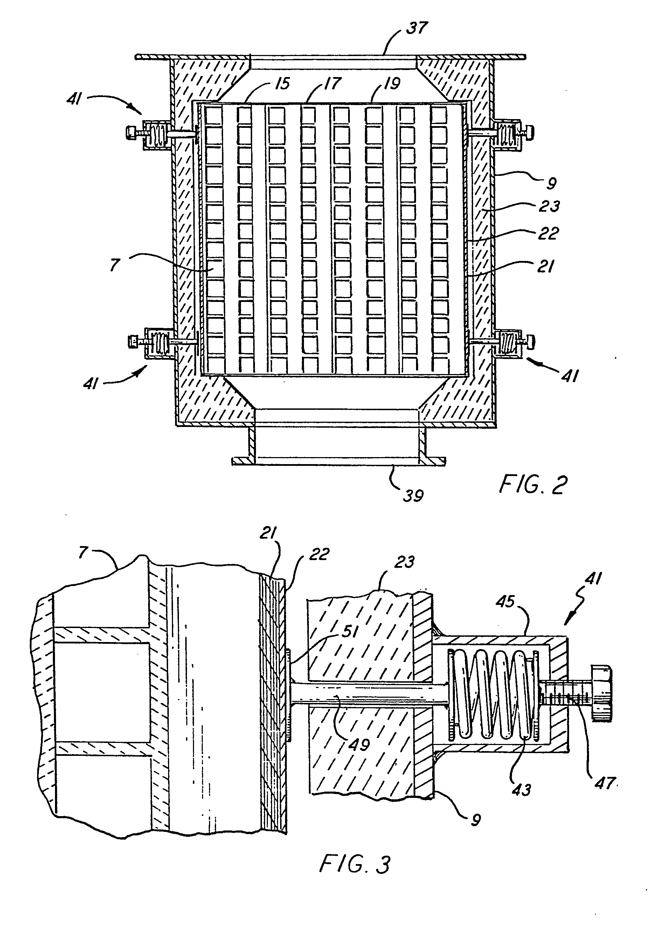

As can better be seen in Fig. 2, a cross-sectional view of Fig. 1 taken along the line 2-2, the recuperator 7 has multiple sections 15, 17 and 19 each separated by a compressible member 21. Also, a compressible member 21 is located immediately adjacent each one of the third pair of opposing faces 29 of the recuperator 7. A support member 22, such as a steel plate for example, is in contact with each of the compressible members 21 adjacent the third pair of opposing faces 29 of the recuperator 7. Moreover, compressive means 41 are affixed to the pair of opposing faces 29 of the housing 9 and exert a force intermediate thereto and the third pair of opposing faces 29 of the ceramic cross-flow recuperator 7.

As to a preferred form of compression means 41, Fig. 3 illustrates a spring-load biasing means having a spring member 43 compressively held within a container 45 sealed in air-tight relationship to the third pair of opposing faces 29 of the housing 9. One end of the spring member 43 exerts a force or a threaded adjustable knob arrangement 47 extending in air-tight relationship through the container 45. The opposite end of the spring member 43 contacts a shaft 49 extending to a foot portion 51 pressing against the support member 22 immediately adjacent the compressible structure 21. Thus, force exerted by the compression means 41 is adjustable and controllable.

In operation, unexpected leakage due to damage such as crack propagation of the ceramic may be inhibited by increasing the compressive force applied to the third pair of opposing faces of the ceramic recuperator 7 and housing 9. In this manner, leakage of the first and second fluids is inhibited and a degree of control over this leakage is provided by the adjustable features of the compression means 41.

D-23,087

-7-

While there has been shown and described what is at present considered the preferred embodiments of the invention, it will be obvious to those skilled in the art that various changes and modifications may be made therein without departing from the invention as defined by the appended claims.

INDUSTRIAL APPLICABILITY

Energy conservation and energy cost reduction is effected by a heat recuperation apparatus employing a ceramic cross-flow recuperator in a housing. The recuperator and housing include first and second pairs of opposing faces each having passages for flow of incoming first and second fluids whereby, for example, heated waste gases are utilized to preheat combustible air for invreasing the operational efficiency of a furnace. A compression means exerts a compressive force on at least one of a third pair of opposing faces of the recuperator and housing to reduce leakage between the fluid passages should damage occur to the recuperator due to thermal shock caused by a furnace shut down, sudden loss of air flow, or unexpected mechanical damage.

23,087

CLAIMS

1.    Heat recuperative apparatus having a ceramic cross-flow recuperator surrounded by a housing wherein said recuperator and housing each have first, second and third pairs of opposing faces with said first and second pairs of opposing faces of said recuperator and housing having aligned openings formed for passage of first and second fluids therethrough, said apparatus characterized by the improvement comprising a compression means formed to exert a compressive force between at least one of said third pairs of opposing faces of said cross-flow recuperator and said housing.

2.    The apparatus of Claim 1 wherein said compressive means is formed to exert a compressive force between both of said third pairs of said cross-flow recuperator and housing.

3.    The apparatus of Claim 1 wherein said housing is a ceramic-lined metal housing.

4.    The apparatus of Claim 1 wherein said first and second fluids are in the form of combustion air and exhaust gases respectively.

5.    The apparatus of Claim 5 including a pressure means exerting a force intermediate at least one of said pairs of opposing faces of said first pair of opposing faces of said recuperator and housing.

6.    The apparatus of Claim 1 wherein said compression means is in the form of spring-loaded biasing means affixed to at least one of said third pair of opposing faces of said housing.

7.    The apparatus of Claim 1 including a compliant layer adjacent each one of said third pair of opposing faces of said recuperator and a non-compliant structure intermediate said compliant layers and said compression means.

D-23,087

8. The apparatus of Claim 1 wherein said cross-flow recuperator is in the form of multiple sections with a compliant means disposed intermediate adjacent sections.

9. In heat recuperation apparatus having a ceramic cross-flow recuperator disposed within a ceramic lined metal housing wherein the ceramic cross-flow recuperator and ceramic-lined metal housing each have first, second and third pairs of aligned opposing faces with passages for first and second fluids through said first and second pairs of opposing faces, the improvement comprising a compression means exerting a compressive force intermediate at least one of said third pair of opposing faces of said ceramic cross-flow recuperator and ceramic-lined metal housing.

10. The improvement of Claim 9 wherein said compression means exerts a compressive force intermediate both of said third pair of opposing faces of said ceramic cross-flow recuperator and ceramic-lined metal housing.

FIG. 1

FIG. 2

FIG. 3